# NEUE EUROPÄISCHE PATENTSCHRIFT

(11) **EP 1 522 434 B2**
(45) Veröffentlichungstag und Bekanntmachung des Hinweises auf die Entscheidung über den Einspruch: **29.07.2015**
(45) Hinweis auf die Patenterteilung: 25.03.2009
(21) Anmeldenummer: 04021440.5
(22) Anmeldetag: 09.09.2004
(51) Int. Cl.: B60H 1/00

(54) **Klimaanlage, insbesondere Kraftfahrzeug-Klimaanlage**
Air-conditioner, in particular vehicle air-conditioner
Climatisation, en particulier climatisation de véhicule

(30) Priorität: 09.10.2003 DE 10347674
(43) Veröffentlichungstag der Anmeldung: 13.04.2005
(73) Patentinhaber: MAHLE Behr GmbH & Co. KG, 70469 Stuttgart (DE)
(72) Erfinder: Dieksander, Wolfgang, 70794 Filderstadt (DE); Litwing, Erich, 73565 Spraitbach (DE)
(74) Vertreter: Grauel, Andreas

(56) Entgegenhaltungen:
- EP-A- 1 013 489
- EP-A1- 1 013 489
- EP-A1- 1 641 642
- EP-B- 0 961 698
- FR-A- 2 717 127
- FR-A1- 2 794 069
- GB-A- 2 329 465

## Beschreibung

Die Erfindung betrifft eine Klimaanlage, insbesondere Kraftfahrzeug-Klimaanlage.

Bei herkömmlichen Kraftfahrzeug-Klimaanlagen wird die von einem Gebläse kommende und nach erfolgter Temperierung mittels eines Verdampfers und eines Heizers einem Mischraum zugeführte Luft mittels mehrerer Luftkanäle den entsprechenden Zielorten zugeführt. Hierbei erfolgt die Steuerung der Luftverteilung in der Regel über einzeine Klappen, wobei je eine Klappe elnem Luftkanal zugeordnet ist. Dabei stehen diese Klappen, um Dichtheitsprobleme auf Grund des bei einer geschlossenen Klappe anstehenden Drucks zu vermeiden und die erforderlichen Steilkräfte gering zu halten, im offenen Zustand häuflg In den Mischraum vor.

Aus der EP 1 266 777 A1 ist eine Kraftfahrzeug-Klimasniage bekannt, die zwei Klappen zur Steuerung des Luftstroms für das Entfrosten der Windschutzscheibe, die Belüftung des Fahrzeuginnenraums und des Fußraums ausweist. Auch bei allen in hierin beschriebenen Varianten stehen die Klappen in den Mischraum vor.

Des Weiteren zeigt die FR 2717 127 eine Heizungsvorrichtung mit einer Verteilkammer, in welcher mittels einer Flügelklappe die Verteilung von Luft auf entscprechende Kanäle erfolgt.

Die GB 2329465 A offenbart eine Klimaanlage bei welcher zwei Luftkanäle mit einer Doppelflügelklappe steuerbar sind.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage, insbesondere Kraftfahrzeug-Klimaanlage, vorgesehen, mit einem nach einem Gebläse, einem Verdampfer, einem Heizer und/oder einem Zuheizer, in einem LuftführungsGehäuse angeordneten Mischraum, von dem eine Mehrzahl von Luftkanälen abzweigt, welche mittels Klappen steuerbar sind, wobei mindestens zwei benachbarte Luftkanäle von einer gemeinsamen Klappe gesteuert werden, und mindestens eine Klappe vorgesehen ist, bei welcher der Schwenkweg ihrer Sperrfläche oder ihres Flügels in einem Luftkanal oder entlang dem Ende eines Luftkanals erfolgt, ohne dass die Sperrfläche oder der Flügel in den Mischraum ragt. Dadurch, dass vorzugsweise keine der Klappen in den Mischraum ragt, ist eine möglichst geräuschlose Luftführung möglich. Ferner lässt sich die Luftverteilung bzw. die Luftmenge einfacher und exakter einstellen. Auch kann der Mischraum einfacher optimiert werden, so dass eine gute Mischung der Luft vor Eintritt in die Luftkanäle erfolgt.

Mindestens eine Klappe ist als Doppelflügel-Klappe ausgebildet, wobei die Schwenkachse in einem Ende einer Trennwand zweier Luftkanäle verläuft, so dass die Luftströme In den beiden Luftkanälen nicht beeinträchtigt wird. Die beiden Flügel der Klappe sind in einem festen Winkel zueinander angeordnet. Eine derartige Doppelflügel-Klappe ermöglicht eine einfache Steuerung zweier Luftkanäle, wobei der erforderliche Kraftaufwand in Grenzen gehalten werden kann.

Erfindungsgemäß ist eine Klappe als Zylinder-Klappe ausgebildet, die seitlich im Mischraum gelagert ist, wobei sie insbesondere derart ausgebildet ist, dass sie keine in den Mischraum hineinragenden Elemente aufweist. Die Seitenflächen, die radial oder im Wesentlichen radial verlaufen, sind in nächster Nähe zur Mischraum-Wand angeordnet, so dass sie keine negativen Einflüsse auf die Luftverteilung haben.

Zur Abdichtung weist die Zylinder-Klappe mindestens einen in Längsrichtung an einem Ende der Sperrfläche der Zylinder-Klappe verlaufenden, etwa in radialer Richtung nach außen zeigenden Vorsprung auf, der in mindestens einer Endposition In Anlage an einen am Luftführungs-Gehäuse ausgebildeten Anschlag ist. Bevorzugt sind an beiden Enden der Sperrfläche Vorsprünge vorgesehen, welche in jeder Endstellung mit einem entsprechend am Luftführungs-Gehäuse ausgebildeten Anschlag gelangen.

Bevorzugt sind die beiden Flügel der Doppelflügel-Klappe in einem von 180° verschiedenen Winkel zueinander angeordnet. Ein Winkel zwischen 90° und 130° wird bevorzugt.

Die beiden Flügel sind bevorzugt asymmetrisch ausgebildet, insbesondere sind sie unterschiedlich lang und/oder weisen eine unterschiedliche Form auf, wobei insbesondere ein oder beide Flügel gekrümmt ausgebildet sein können, so dass eine andere Klappe, insbesondere eine Zylinder-Klappe in den entsprechenden Bereich schwenken kann.

Erfindungsgemäß ist mindestens ein Luftkanal von zwei Klappen verschließbar, so dass beispielsweise mit zwei Klappen drei Luftkanäle nahezu beliebig gesteuert werden können. Dabei sind insbesondere Zwischenstellungen der Klappen möglich.

Im Folgenden wird die Erfindung anhand eines Ausführungsbeispiels unter Bezugnahme auf die Zeichnung im Einzelnen erläutert. In der Zeichnung zeigen:
Fig. 1 eine schematische Darstellung einer Klimaanlage gemäß dem ersten Ausführungsbeispiel, und
Fig. 2 eine schematische Darstellung einer nicht erfindungsgemäßen Klimaanlage

Eine Kraftfahrzeug-Klimaanlage 1 weist in einem Luftführungs-Gehäuse 2 ein Gebläse 3, einen Verdampfer 4 einen Heizer 5 und einen Zuheizer 5a, beispielsweise einen PTC-Zuheizer, zur Lufttemperierung, eine Misch-Klappe 6 zur Regelung der Lufttemperatur, einen Mischraum 7 zur Mischung der kalten und warmen Luft, einen Entfrost-Luftkanal 8 zum Enteisen der Windschutzscheibe, einen Belüftungs-Luftkanal 9 zur Frisch- oder Umluftzufuhr in den Fahrzeuginnenraum durch die Mittel- oder Seitendüsen, einen Fußraum-Luftkanal 10 zur Frisch- oder Umluftzufuhr in den Fußraum, sowie zwei Klappen 11 und 12 auf, welche der Steuerung der Luftverteilung auf die drei Luftkanäle 8, 9 und 10 dienen. Hierbei sind die unterschiedlichen Endstellungen der Klappen 6, 11 und 12 zur Verdeutlichung unterschiedlich dar gestellt.

Die Misch-Klappe 6 ist als Zylinder-Klappe ausgebildet, die seitlich im Mischraum 7 gelagert ist, so dass die Schwenkachse 6' durch den Mischraum 7 verläuft, wobei die Sperrfläche 6" entlang dem Rand des Mischraums 7 verschwenkbar ist. Die Sperrfläche 6" ist im Wesentlichen zylinderförmig ausgebildet, wobei sie der Mantelfläche eines viertel Zylinders entspricht. An den Seiten sind durchgehende 90°-Kreissegmente vorgesehen, an welchen in der Schwenkachse 6' Zapfen (nicht dargestellt) zur Lagerung und zum Antrieb der Klappe 6 angeordnet sind. Dabei können die Zapfen auch mit einer Verzahnung versehen oder an den Zapfen kann ein Zahnrad vorgesehen sein.

Zur besseren Abdichtung sind an der Klappe 6 in Längsrichtung der Sperrfläche 6" verlaufende, sich radial nach außen erstreckende Vorsprünge vorgesehen, die in den Endstellungen der Klappe 6 an am Gehäuse 2 vorgesehenen Anschlägen anliegen. Die Klappe 6 ist hierbei derart ausgebildet, dass der Mischraum 7 im Wesentlichen klappenfrei ist, d.h. es verläuft insbesondere keine Welle oder Versteifung in der Schwenkachse 6', welche die Luftströmung beeinträchtigen würde.

Zur Steuerung der Luftzufuhr in den Entfrost-Luftkanal 8 und BelüftungsLuftkanal 9 ist die als Doppelflügel-Klappe ausgebildete Klappe 11 vorgesehen, wobei die Schwenkachse 11' am Ende der Zwischenwand zwischen den beiden Luftkanälen 8 und 9 angeordnet ist, so dass der eine Flügel 11a der Klappe 11 in den Luftkanal 8 hinein schwenkt und der zweite Flügel 11 b der Klappe 11 in den Luftkanal 9 hinein schwenkt, so dass sie in keiner Stellung in den Mischraum 7 ragen. Die beiden Flügel 11a und 11 b der Klappe 11 sind in einem festen Winkel zueinander angeordnet, wobei der Winkel etwas mehr als 90° beträgt. Der erste Flügel 11a ist vorliegend gerade, der zweite Flügel 11 b gebogen ausgebildet, wobei die Krümmung etwa der Krümmung der Klappe 12, die nachfolgend näher beschrieben wird, entspricht oder etwas kleiner als dieselbe ist, da der Flügel 11 b außerhalb der Sperrfläche 12" der Klappe 12 angeordnet ist.

Eine der zuvor beschriebenen Misch-Klappe 6 entsprechende ZylinderKlappe bildet die Klappe 12, wobei diese Klappe 12 nur einen Winkel von ca. 65° einnimmt. Die Klappe 12 dient der Steuerung der Luftzufuhr in den Belüftungs-Luftkanal 9 und den Fußraum-luftkanal 10, wobei sie stufenlos zwischen ihren Endstellungen mittels Verschwenken um ihre Schwenkachse 12' verstellbar ist. Auch diese Klappe 12 ragt, abgesehen von den Seitenflächen, nicht in den Mischraum 7.

Je nach Bedarf können die beiden Klappen 11 und 12 beliebig verstellt werden, wobei sie sich nicht gegenseitig behindem. Ferner bleibt der Mischraum klappenfrei, so dass er in Hinblick auf eine optimale Vermischung ausgelegt werden kann.

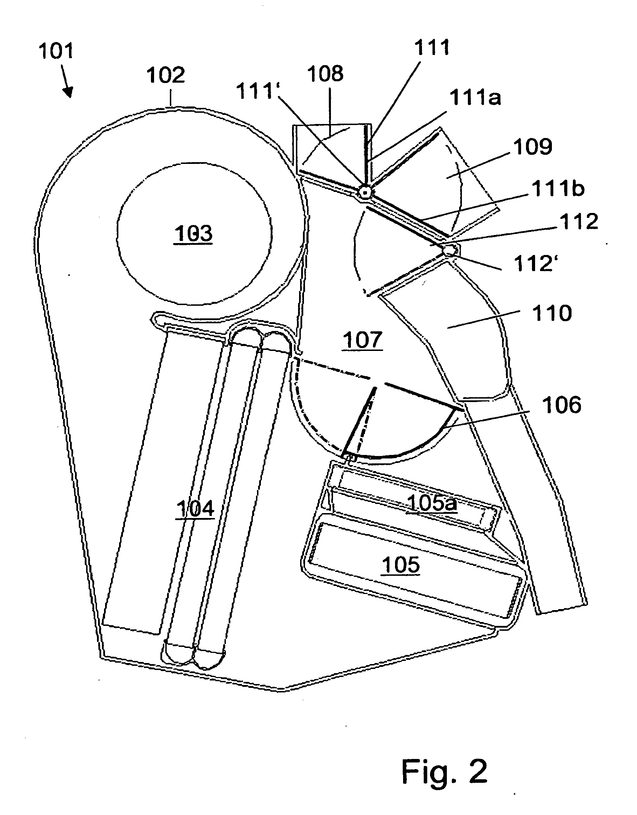

Fig. 2 zeigt eine Klimaanlage bei der gleiche oder gleichwirkende Elemente mit um 100 höheren Bezugszeichen versehen sind als beim ersten Ausführungsbeispiel. Die Anordnung bzw. Funktion des Gebläses 103, des Verdampfers 104, des Heizers 105, des Zuheizers 105a, der Misch-Klappe 106, des Mischraums 107, des Entfrost-Luftkanals 108, des Belüftungs-Luftkanals 109, des Fußraum-Luftkanals 110 im Luftführungs-Gehäuse 102 der Klimaanlage 101 unterscheiden sich nicht von der des ersten Ausführungsbeispiels, so dass auf diese nicht näher eingegangen wird.

Entsprechend dem ersten Ausführungsbeispiel ist die Klappe 111 zwischen dem Entfrost-Luftkanal 108 und dem Belüftungs-Luftkanal 109 wiederum als Doppelflügel-Klappe ausgebildet, wobei die Schwenkachse 111' wiederum entsprechend verläuft. Die Flügel 111a und 111b sind in einem Winkel von ca. 110° zueinander angeordnet, wobei vorliegend beide Flügel 111a und 111 b gerade ausgebildet sind, jedoch ist der zweite Flügel 111 b etwas länger als der erste Flügel 111a, da der von diesem Flügel 111b zu steuernde Luftkanal 109 breiter als der vom ersten Flügel 111 a zu steuernde Luftkanal 108 ist.

Zur Steuerung des Fußraum-Luftkanals 110 und zusätzlich des Belüftungs-Luftkanals 109 ist eine herkömmliche Klappe112 vorgesehen, welche je nach Stellung (Zwischenstellungen) etwas in den Mischraum 107 ragt, wobei die Schwenkachse 112' im Zwischenbereich zwischen den benachbarten Luftkanälen 109 und 110 angeordnet ist. Hierbei ist der Fußraum-Luftkanal 110 derart ausgebildet, dass die Klappe 112 nur einen relativ kleinen Schwenkbereich hat, so dass die Beeinflussungen des Mischraums 107 gering gehalten werden können.

Gemäß nicht in der Zeichnung dargestellter Varianten zu dem Ausführungsbeispiel können die Funktionen der Luftkanäle beliebig vertauscht werden und/oder die Anordnung der Klappen 11 und 12 oder 111 und 112 vertauscht werden.

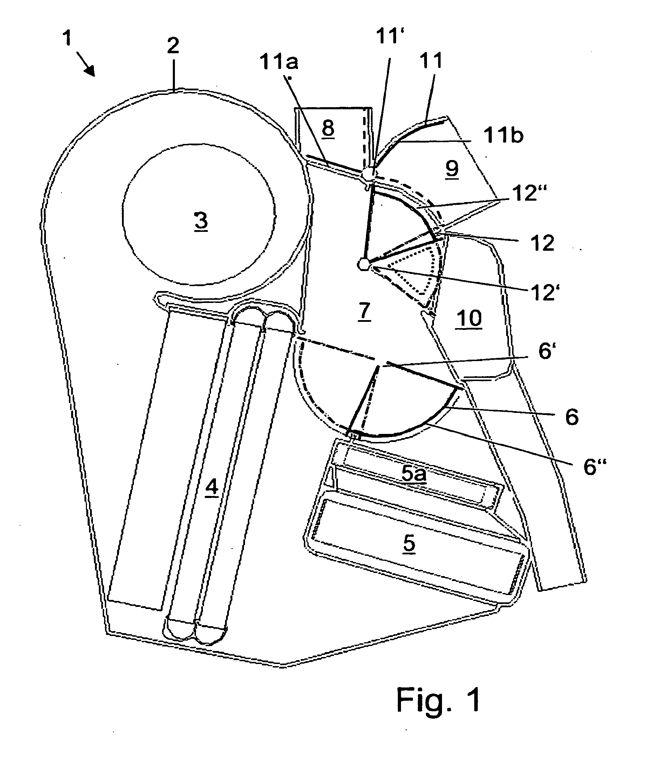

Ferner kann beispielsweise der Fußraum-Luftkanal stirnseitig bezüglich einer als Zylinder-Klappe ausgebildeten Klappe 12 angeordnet sein, wobei auch eine Aufteilung des Fußraum-Luftkanals auf die beiden Seiten möglich ist, so dass die entsprechende(n) Seitenfläche(n) die Spenfunktion der Sperrfläche 12" in der entsprechenden Stellung übernehmen. In Fig. 1 ist eine Öffnung des seitlich angeordneten Fußraum-Luftkanals durch eine gepunktete Linie angedeutet. Durch die seitliche Anordnung des Fußraum-Luftkanals ergibt sich im in Fig. 1 rechts dargestellten Bereich ein Raumgewinn.

Die Klappen, insbesondere die Doppelflügel-Klappen, können bei Bedarf auch mehrteilig, insbesondere zweiteilig, ausgebildet sein, so dass beispielsweise in einer Schwenkachse zwei Doppelflügel-Klappen angeordnet sein können. Dabei können die in einer Schwenkachse angeordneten Klappen auch unterschiedlich ausgebildet sein, beispielsweise unterschiedlich breit sein oder eine unterschiedliche Gestalt aufweisen. Hierbei ist bevorzugt eine getrennte Steuerung der Klappen vorgesehen.

### Bezugszeichenliste

1, 101 Kraftfahrzeug-Klimaanlage
2, 102 Luftführungs-Gehäuse
3, 103 Gebläse
4, 104 Verdampfer
5, 105 Heizer
5a, 105a Zuheizer
6, 106 Misch-Klappe
6' Schwenkachse
6" Sperrfläche
7, 107 Mischraum
8, 108 Entfrost-Luftkanal
9, 109 Belüftungs-Luftkanal
10, 110 Fußraum-Luftkanal
11, 111 Klappe
11', 111' Schwenkachse
11a, 11b, 111a, 111b Flügel
12, 112 Klappe
12', 112' Schwenkachse
12" Sperfläche

## Patentansprüche

1. Klimaanlage, insbesondere Kraftfahrzeug-Klimaanlage, mit einem nach einem Gebläse (3; 103), einem Verdampfer (4; 104) einem Heizer (5; 105) und/oder einem Zuheizer (4a; 105a) in einem Luftführungs-Gehäuse (2; 102) angeordneten Mischraum (7; 107), von dem eine Mehrzahl von Luftkanälen (8, 9, 10; 108, 109, 110) abzweigt, welche mittels Klappen (11, 12; 111. 112) steuerbar sind, wobei mindestens zwei benachbarte Luftkanäle (8 und 9 bzw. 9 und 10; 108 und 109 bzw. 109 und 110) von einer gemeinsamen Doppelflügelklappe (11; 111) gesteuert werden, deren Schwenkachse in einem Ende einer Trennwand der zwei benachbarten Luftkanäle verläuft und deren Flügel (11a, 11b; 111a, 111b) in einem festen Winkel zueinander derart angeordnet sind, dass die Schwenkung der Flügel (11a, 11b; 111a, 111b) jeweils in einem der benachbarten Luftkanäle (8, 9; 108, 109) erfolgt, ohne dass die Flügel (11a, 11b; 111a, 111b) in den Mischraum (7; 107) ragen, wobei einer der benachbarten Luftkanäle (9; 109) von einer weiteren Klappe verschließbar ist, wobei die weitere Klappe als Zylinderklappe ausgebildet ist, die zwei benachbarte Luftkanäle steuert und im Luftführungsgehäuse seitlich des Mischraums (7) derart angeordnet ist, dass die Schwenkung ihrer Sperrfläche (12") entlang dem Ende des Luftkanals (9,10) erfolgt, ohne dass die Sperrfläche (12") in den Mischraum (7; 107) ragt.

2. Klimaanlage nach Anspruch 1, **dadurch gekennzeichnet, dass** der Winkel zwischen den beiden Flügeln (11a, 11b; 111a, 111b) von 180° verschieden ist und insbesondere 90° bis 130° beträgt.

3. Klimaanlage nach Anspruch 1 oder 2, **dadurch gekennzeichnet, dass** die beiden Flügel (11a, 11b; 111a, 111b) asymmetrisch ausgebildet sind.

4. Klimaanlage nach einem der Ansprüche 1 bis 3, **dadurch gekennzeichnet, dass** die beiden Flügel (11a, 11b; 111a, 111b) unterschiedlich lang sind.

5. Klimaanlage nach einem der Ansprüche 1 bis 4, **dadurch gekennzeichnet, dass** mindestens ein Flügel (11b) der Doppelflügel-Klappe gekrümmt ausgebildet ist.

6. Klimaanlage nach Anspruch 1 bis 5, **dadurch gekennzeichnet, dass** die Zylinder-Klappe mindestens einen in Längsrichtung an einem Ende der Sperrfläche (12") der Zylinder-Klappe verlaufenden, etwa in radialer Richtung nach außen zeigenden Vorsprung aufweist, der in mindestens einer Endposition in Anlage an einen am Luftführungs-Gehäuse ausgebildeten Anschlag ist.

7. Klimaanlage nach Anspruch 1 bis 6, **dadurch gekennzeichnet, dass** die Zylinder-Klappe an beiden in Längsrichtung verlaufenden Enden der Sperrfläche je einen Vorsprung aufweist, der in jeder Endposition in Anlage an einen am Luftführungs-Gehäuse (2) ausgebildeten Anschlag ist.

8. Klimaanlage nach einem der Ansprüche 1 bis 7, **dadurch gekennzeichnet, dass** ein Anschlag für die Zylinder-Klappe im Bereich der Schwenkachse (11') der Doppelflügel-Klappe ausgebildet ist.

9. Klimaanlage nach einem der vorhergehenden Ansprüche, **dadurch gekennzeichnet, dass** eine Misch-Klappe (6; 106) vorgesehen ist, die im Luftführungsgehäuse seitlich des Mischraums (7) gelagert ist, so dass die Schwenkachse (6') durch den Mischraum (7; 107) verläuft, wobei die Sperrfläche (6") entlang dem Rand des Mischraums (7; 107) verschwenkbar ist.

## Claims

1. Air-conditioner, in particular vehicle air-conditioner, having a mixing chamber (7; 107) positioned in an air conduction housing (2; 102) downstream of a fan (3; 103), an evaporator (4; 104), a heater (5; 105) and/or an auxiliary heater (4a; 105a) and from which branch off a plurality of air ducts (8, 9, 10; 108, 109, 110) which can be controlled by means of valves (11, 12; 111, 112), wherein at least two adjacent air ducts (8 and 9 or 9 and 10; 108 and 109 or 109 and 110) being controlled by a common double wing valve (11; 111) which has an axis of pivoting which runs through one end of the separating wall between the two adjacent air ducts and wings (11a, 11b; 111a, 111b) which are positioned at a fixed angle in relation to one another such that the wings (11a, 11b; 111a, 111b) always pilot within one of the adjacent air ducts (8, 9; 108, 109) without the wings (11a, 11b; 111a, 111b) projecting into the mixing chamber (7; 107), wherein one of the adjacent air ducts (9; 109) can be closed by a further valve which is designed as a cylinder valve which controls two adjacent air ducts and is positioned in the air conduction housing to the side of the mixing chamber (7) in such a manner that its blocking face (12") pivots alone the end of the air duct (9, 10) without the blocking face (12") protecting into the mixing chamber (7; 107).

2. Air-conditioner in accordance with claim 1, **characterised in that** the angle between the two wings (11a, 11b; 111a, 111b) is different from 180° and in particular 90° to 130°.

3. Air-conditioner in accordance with claim 1 or 2, **characterised in that** the two wings (11a, 11b; 111a, 111b) are asymmetric in design.

4. Air-conditioner in accordance with one of claims 1 to 3, **characterised in that** the two wings (11a, 11b; 111a, 111b) are of different lengths.

5. Air-conditioner in accordance with one of claims 1 to 4, **characterised in that** at least one wing (11b) of the double wing valve is curved in design.

6. Air-conditioner in accordance with claims 1 to 5, **characterised in that** the cylinder valve has at least one protection running longitudinally at one end of the blocking face (12") of the cylinder valve which points approximately radially outwards and which bears on a stop provided on the air conduction housing in at least one end position.

7. Air-conditioner in accordance with claims 1 to 6, **characterised in that** the cylinder valve has a projection at either longitudinally running end of the blocking face which bears on a stop provided on the air conduction housing (2) in each end position.

8. Air-conditioner in accordance with one of claims 1 to 7, **characterised in that** a stop for the cylinder valve is provided in the area of the axis of pivoting (11') of the double wing valve.

9. Air-conditioner in accordance with one of the preceding claims, **characterised in that** a mixing valve (6; 106) is provided which is mounted in the air conduction housing to the side of the mixing chamber (7) such that the axis of pivoting (6') runs through the mixing chamber (7; 107), wherein the blocking face (6") is pivotable along the edge of the mixing chamber (7; 107).

## Revendications

1. Système de climatisation, en particulier système de climatisation d'un véhicule automobile, comprenant un espace de mélange (7 ; 107) disposé dans un carter de passage d'air (2 ; 102), en aval d'un ventilateur (3 ; 103), d'un évaporateur (4 ; 104), d'un dispositif de chauffage (5 ; 105) et / ou d'un dispositif de chauffage auxiliaire (4a ; 105a), espace de mélange à partir duquel part une pluralité de conduits d'air (8, 9, 10 ; 108, 109, 110) qui sont réglables au moyen de volets (11, 12 ; 111, 112), où au moins deux conduits d'air voisins (8 et 9 ou 9 et 10 ; 108 et 109 ou 109 et 110) sont réglés par un volet commun (11 ; 111), à double ailette, dont l'axe de pivotement s'étend à une extrémité d'une paroi de séparation des deux conduits d'air voisins et dont les ailettes (11a, 11b ; 111a, 111b) sont disposées, l'une par rapport à l'autre, suivant un angle fixe, de manière telle que le pivotement des ailettes (11a, 11b ; 111a, 111b) se produise, à chaque fois, dans l'un des conduits d'air voisins (8, 9 ; 108, 109), sans que les ailettes (11a, 11b ; 111a, 1111a) pénètrent dans l'espace de mélange (7 ; 107), où l'un des conduits d'air voisins (9 ; 109) peut être fermé par un autre volet, où l'autre volet est conçu comme un volet cylindrique, qui règle deux conduits d'air voisins et est disposé dans le carter de passage d'air, latéralement par rapport à l'espace de mélange (7), de manière telle que le pivotement de la surface d'arrêt (12") dudit volet cylindrique se produise le long de l'extrémité du conduit d'air (9, 10), sans que la surface d'arrêt (12") pénètre dans l'espace de mélange (7 ; 107).

2. Système de climatisation selon la revendication 1, **caractérisé en ce que** l'angle formé entre les deux ailettes (11a, 11b ; 11a, 11b) est différent de 180° et est compris, en particulier, entre 90° et 130°.

3. Système de climatisation selon la revendication 1 ou 2, **caractérisé en ce que** les deux ailettes (11a, 11b ; 111a, 111b) sont configurées de façon asymétrique.

4. Système de climatisation selon l'une quelconque des revendications 1 à 3, **caractérisé en ce que** les deux ailettes (11a, 11b ; 111a, 111b) sont de longueur différente.

5. Système de climatisation selon l'une quelconque des revendications 1 à 4, **caractérisé en ce qu'**au moins une ailette (11b) du volet à double ailette est configurée de façon courbe.

6. Système de climatisation selon la revendication 1 à 5, **caractérisé en ce que** le volet cylindrique présente au moins une partie saillante pointant vers l'extérieur, à peu près dans le sens radial, et s'étendant, dans le sens longitudinal, au niveau d'une extrémité de la surface d'arrêt (12") du volet cylindrique, partie saillante qui, dans au moins une position de fin de course, vient en appui sur une butée formée sur le carter de passage d'air.

7. Système de climatisation selon la revendication 1 à 6, **caractérisé en ce que** le volet cylindrique présente à chaque fois, au niveau des deux extrémités de la surface d'arrêt s'étendant dans le sens longitudinal, une partie saillante qui, dans chaque position de fin de course, vient en appui sur une butée formée sur le carter de passage d'air (2).

8. Système de climatisation selon la revendication 1 à 7, **caractérisé en ce qu'**une butée, prévue pour le volet cylindrique, est configurée dans la zone de l'axe de pivotement (11') du volet à double ailette.

9. Système de climatisation selon l'une quelconque des revendications précédentes, **caractérisé en ce qu'**il est prévu un volet mélangeur (6 ; 106) qui est logé dans le carter de passage d'air, latéralement par rapport à l'espace de mélange (7), de manière telle que l'axe de pivotement (6') s'étende à travers l'espace de mélange (7 ; 107), où la surface d'arrêt (6") peut pivoter le long du bond de l'espace de mélange (7 ; 107).
